# EUROPÄISCHE PATENTSCHRIFT

(11) **EP 2 121 394 B1**
(45) Veröffentlichungstag und Bekanntmachung des Hinweises auf die Patenterteilung: **30.09.2015**
(21) Anmeldenummer: 07857798.8
(22) Anmeldetag: 19.12.2007
(51) Int. Cl.: B60S 1/40

(54) **VERBINDUNGSELEMENT ZUM GELENKIGEN VERBINDEN EINES WISCHBLATTS MIT EINEM WISCHARM**
CONNECTING ELEMENT FOR THE ARTICULATED CONNECTION OF A WIPER BLADE TO A WIPER ARM
ÉLÉMENT DE LIAISON POUR LA LIAISON ARTICULÉE D'UN BALAI D'ESSUIE-GLACE À UN BRAS D'ESSUIE-GLACE

(30) Priorität: 19.02.2007 DE 102007008145; 11.05.2007 DE 102007022185
(43) Veröffentlichungstag der Anmeldung: 25.11.2009
(73) Patentinhaber: Robert Bosch GmbH, 70442 Stuttgart (DE)
(72) Erfinder: COEMANS, Wildrik, B-3840 Borgloon (BE); VAN BAELEN, David, B-3020 Winksele (BE); BIANK, Andreas, F-67160 Oberlauterbach (FR); COART, Kris, B-3400 Landen (BE); BEELEN, Hans, B-3540 Herk de Stad (BE); WINDMOLDERS, Eric, B-3510 Kermt (BE); DEKEYSER, Ernest, B-3270 Scherpenheuvel (BE)
(86) Internationale Anmeldenummer: PCT/EP2007/064175
(87) Internationale Veröffentlichungsnummer: WO 2008/101561

(56) Entgegenhaltungen:
- DE-A1- 4 229 127
- DE-A1- 19 537 854

## Beschreibung

### Stand der Technik

Die Erfindung geht von einem Verbindungselement zum gelenkigen Verbinden eines Wischblatts mit einem Wischarm nach dem Oberbegriff des Anspruchs 1 aus.

Aus der WO 99/22971 ist ein Scheibenwischer mit einem Wischarm und einem Wischblatt bekannt, wobei das Wischblatt über ein Verbindungselement mit dem Wischarm gelenkig verbunden ist. Das Verbindungselement besitzt zu diesem Zweck eine zu einer Fahrzeugscheibe hin offene Nabe, die einen am Wischblatt befestigten Gelenkstift über mehr als die Hälfte eines Umfangs umfasst. Die Nabe wird von zwei Federzungen gebildet, die bei der Montage des Verbindungselements auf den Gelenkstift federnd nachgeben und den Gelenkstift in seiner Endposition verrasten. Zur leichteren Montage des Gelenkstifts besitzen die Federzungen an der Öffnung der Nabe Schrägen, durch die sich die Öffnung nach außen hin erweitert. Die offene Nabe ist im mittleren Bereich des Verbindungselements angeordnet. Dieses weist in Längsrichtung zu beiden Seiten der Nabe an den Außenseiten seiner Seitenwände Führungsflächen auf, mit denen das Verbindungselement in einem Anschlusselement des Wischblatts seitlich geführt ist. Zwischen den Seitenwänden befinden sich zum Wischarm hin Lagerflächen für ein hakenförmiges Ende des Wischarms. Dieses hat im Längsschnitt eine u-förmige Gestalt und ist durch Rastnasen an nachgiebigen Elementen in Rastlöchern bzw. Rastvertiefungen am Wischarm befestigt.

Aus der DE 195 37 854 A1 ist ein Scheibenwischer mit einem ähnlichen Verbindungselement bekannt, das in Längsrichtung zu beiden Seiten mit Abstand von der offenen Nabe Schächte aufweist, die quer zur Längsrichtung verlaufen, und in die rechtwinklig umgebogene Haken des Wischarms eingreifen und mit dem Verbindungselement verrasten. Der Abstand der Schächte von den Federzungen der Nabe ist so groß, dass durch die Haken des Wischarms der Federweg der Federzungen nicht beeinträchtigt wird.

Die beschriebenen Scheibenwischer haben konventionelle Wischblätter mit einem Tragbügelsystem, es sind jedoch auch Wischblätter in Flachbauweise beispielsweise aus der DE 137 64 843 A1 bekannt, die mindestens ein Tragelement mit einem Anschlusselement aufweisen, das einen Lagerstift für ein hakenförmiges Ende eines Wischarms aufweist. Solche Wischblätter sind ebenfalls für derartige Verbindungselemente geeignet, wobei der Lagerstift oberhalb einer Wischleiste angeordnet ist, aber auch seitlich über das Anschlusselement vorstehen kann.

Ein gattungsgemässer Wischadapter ist aus dem Dokument DE4229127 bekannt.

### Offenbarung der Erfindung

Nach der Erfindung ist die Nabe über die Hälfte ihres Umfangs offen und die Federzunge, die mit einem Rastnocken die Öffnung der Nabe sperrt, gibt in Richtung auf die Lagerfläche elastisch nach. Dabei ist der Abstand zwischen der Lagerfläche für das hakenförmige Ende und der Federzunge so dimensioniert, dass das hakenförmige Ende in montiertem Zustand die Federzunge in Richtung auf die Lagerfläche blockiert. Bei der erfindungsgemäßen Gestaltung braucht die offene Nabe selbst nicht elastisch nachzugeben. Sie kann daher sehr steif gestaltet werden, sodass sie die Führungsaufgaben für das Wischblatt optimal übernehmen kann. Die Federzunge hat vor allem eine Haltefunktion für den Lagerstift. Da sie im montierten Zustand durch das hakenförmige Ende des Wischarms in ihrer elastischen Nachgiebigkeit gehemmt ist, kann sie als weiches Federelement ausgebildet sein, wodurch der Lagerstift des Wischblatts mit geringem Kraftaufwand montiert werden kann. Demgegenüber sind die Kräfte, um das Verbindungselement im montierten Zustand gewaltsam zu lösen, außerordentlich hoch, ohne dabei die Federzunge extrem zu belasten, da sich diese an dem hakenförmigen Ende des Wischarms abstützt. So erreicht man eine leicht montierbare Verbindung zwischen Wischblatt und Wischarm, die sich im Betrieb nicht selbsttätig lösen kann und deren gute Führungseigenschaften auch über eine lange Lebensdauer erhalten bleiben.

Zweckmäßigerweise bildet ein parallel zur offenen Nabe verlaufender Lagerbolzen die Lagerfläche. An diesen kann in üblicher Weise das hakenförmige Ende des Wischarms eingehängt werden, wobei das wischarmseitige Ende des hakenförmigen Endes an einer Brücke des Verbindungselements abstützt, die die beiden Seitenwände des Verbindungselements miteinander verbindet. Zwischen der offenen Nabe und dem Lagerbolzen verläuft quer zu den Seitenwänden des Verbindungselements eine Schottwand, in der die Federzunge vorgesehen ist. Der Abstand zwischen dem Lagerbolzen und der Schottwand bzw. der Federzunge ist auf die Dicke des hakenförmigen Endes so abgestimmt, dass bei einem montierten hakenförmigen Ende die Federzunge nicht mehr in Richtung auf den Lagerbolzen ausweichen kann und somit die offene Nabe mit seinem Rastnocken blockiert.

Während die offene Nabe durch entsprechende Öffnungen in den Seitenwänden des Verbindungselements gebildet ist und somit aufgrund ihrer großen axialen Erstreckung eine optimale Stützweite mit guten Führungseigenschaften besitzt, liegt die Federzunge zwischen den Seitenwänden und ist schmaler als die axiale Streckung der offenen Nabe. Sie wird zweckmäßigerweise durch zwei parallele Schlitze in der Schottwand gebildet. Ihre Federsteifigkeit kann durch ihre Breite und Dicke modifiziert werden. Diese werden so gewählt, dass einerseits eine ausreichende Festigkeit gewährleistet ist und andererseits das Verbindungselement mit einem geringen Kraftaufwand auf den Lagerstift des Wischblatts montiert werden kann. Zur Versteifung der offenen Nabe besitzt das Verbindungselement in diesem Bereich eine Deckwand, die die beiden Seitenwände miteinander verbindet.

Gemäß einer weiteren Ausführung der Erfindung ist an dem dem Wischarm zugewandten Ende des Verbindungselements eine die Seitenwände verbindende Brücke vorgesehen, die als Anlage für den Wischarm dient. Dadurch wird die Stabilität des Verbindungselements und damit die Führung des Wischblatts verbessert. Dabei ist es vorteilhaft, dass die Brücke zwei seitliche, zum Anschlusselement weisende Seitenwangen aufweist. Diese liegen mit ihren Innenflächen an den Außenseiten des oberen Schenkels des hakenförmigen Endes des Wischarms an.

Die Seitenwangen weisen an ihren Außenseiten Griffleisten zur besseren Handhabung des Verbindungselements auf.

Das erfindungsgemäße Verbindungselement kann bei allen Wischblättern mit Vorteil verwendet werden, die einen Lagerstift besitzen, gleichgültig, ob der Wischarm oberhalb des Wischblatts oder seitlich versetzt dazu verläuft und ob das Wischblatt einen konventionellen Aufbau oder eine Flachbauweise aufweist.

Das Verbindungselement wird zweckmäßigerweise durch eine Abdeckkappe nach außen verkleidet, indem die Abdeckkappe auf das Anschlusselement geklippst wird. Die Abdeckkappe bildet zwischen ihren Seitenwänden, einer Frontwand und einer hinteren Stirnwand eine Öffnung, durch die das Verbindungselement im montierten Zustand aufgeklappt werden kann, sodass das hakenförmige Ende des Wischarms am Verbindungselement montiert werden kann. Vorteilhafterweise ist zwischen den Oberkanten der Seitenwände und der Oberkante der Stirnwand der Abdeckkappe ein Absatz vorgesehen, der der Dicke des hakenförmigen Endes entspricht. Die Erstreckung des Absatzes in Längsrichtung entspricht der Erstreckung der Seitenwangen, sodass im montierten Zustand des hakenförmigen Endes die Öffnung der Abdeckkappe nach oben weitgehend durch den oberen Schenkel des hakenförmigen Endes und den Seitenwangen des Verbindungselements abgedeckt ist, sodass sich ein vorteilhaftes geschlossenes Design ergibt, das durch individuelle Formgebung der Abdeckkappe dem jeweiligen Anwendungsfall angepasst werden kann.

### Kurze Beschreibung der Zeichnungen

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Teilansicht eines Scheibenwischers mit einem erfindungsgemäßen Verbindungselement von der Seite,
- Fig. 2: ein Verbindungselement nach Fig. 1 an einem Wischarm in vergrößertem Maßstab,

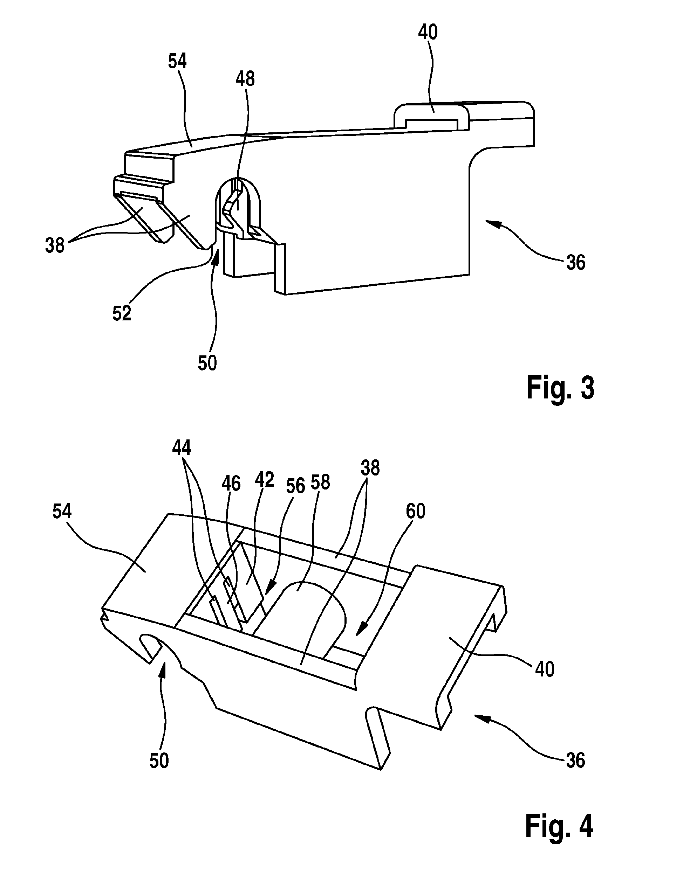

- Fig. 3: eine perspektivische Ansicht eines Verbindungselements nach Fig. 1 schräg von unten,
- Fig. 4: eine perspektivische Ansicht eines Verbindungselements nach Fig. 1 schräg von oben
- Fig. 5: eine perspektivische Ansicht eines Wischblatts mit einer Variante eines Verbindungselements,
- Fig. 6: ein Wischblatt nach Fig. 5 mit einer Abdeckkappe in Explosionsdarstellung und
- Fig. 7: ein Wischblatt nach Fig. 6 im montierten Zustand mit aufgeklapptem Verbindungselement.

### Ausführungsformen der Erfindung

Zu einem Scheibenwischer 10 gehört ein Wischblatt 14, das mit einem Wischarm 12 gelenkig verbunden ist. Hierzu besitzt das Wischblatt 14 ein Anschlusselement 22, dessen zwei in Längsrichtung des Wischblatts 14 verlaufende Seitenwände 24 durch einen Lagerstift 26 miteinander verbunden sind. Das Anschlusselement 22 ist an mindestens einem Tragelement 18 befestigt, das in bzw. an einer Wischleiste 20 vorgesehen ist, die von dem Wischarm 12 über eine Fahrzeugscheibe 16 geführt wird.

Ein Verbindungselement 36 ist mittels einer zur Fahrzeugscheibe 16 hin offenen Nabe 50 auf dem Lagerstift 26 gelagert. Die Öffnung der Nabe 50 erstreckt sich über die Hälfte des Umfangs des Lagerstifts 26, sodass die Montage ohne elastische oder plastische Aufweitung der offenen Nabe 50 erfolgen kann. Eine Deckwand 54, die die Seitenwände 38 des Verbindungselements 36 miteinander verbindet, versteift die Nabe 50. Das Verbindungselement 36 wird auf den Lagerstift 26 durch eine Federzunge 46 mit einem Rastnocken 48 gesichert, der in den offenen Bereich der Nabe 50 hineinragt und bei der Montage auf Grund der Elastizität der Federzunge 46 federnd nachgibt. Die Federzunge 46 ist Bestandteil einer Schottwand 42, die die Seitenwände 38 des Verbindungselements 36 miteinander verbindet. Sie wird von zwei seitlichen Schlitzen 44 in der Schottwand 42 begrenzt.

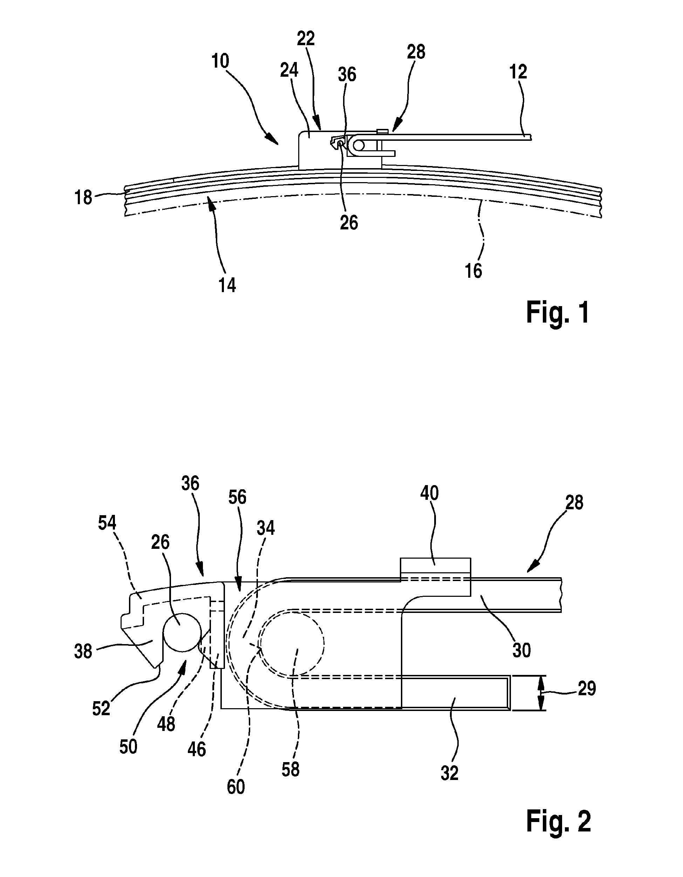

Auf der dem Lagerstift 26 abgewandten Seite der Schottwand 42 befindet sich mit Abstand ein Lagerbolzen 58, der an seinem Umfang eine Lagerfläche 60 für ein hakenförmiges Ende 28 des Wischarms 12 besitzt. Das hakenförmige Ende 28 hat einen oberen Schenkel 30 und einen unteren Schenkel 32, die über ein Bogenstück 34 miteinander verbunden sind. Im montierten Zustand (Fig. 2) umfasst das Bogenstück 34 den Lagerbolzen 58, wobei die Dicke 29 des hakenförmigen Endes 28 in Bezug auf den Abstand zwischen der Federzunge 46 und dem Lagerbolzen 58 so bemessen ist, dass das Bogenstück 34 mit seinem äußeren Umfang den Federweg der Federzunge 46 in Richtung auf den Lagerbolzen 58 bzw. auf die Lagerfläche 60 blockiert. Das hakenförmige Ende 28 stützt sich im montierten Zustand mit seinem oberen Schenkel 30 an einer Brücke 40 ab, die an dem dem Wischarm 12 zugewandten Ende des Verbindungselements 36, dessen Seitenwände 38 miteinander verbindet.

Bei der Montage, die durch Schrägen 52 im Bereich der Öffnung der Nabe 50 erleichtert wird, wird zunächst das Verbindungselement 36 auf den Lagerstift 26 geklippst und danach das hakenförmige Ende 28 durch Hub- und Schwenkbewegungen zunächst durch einen Zwischenraum 62 zwischen dem Lagerbolzen 58 und der Brücke 40 geschoben und anschließend der untere Schenkel 32 des u-förmig gebogenen hakenförmigen Endes 28 durch einen Zwischenraum 56 zwischen der Schottwand 42 bzw. der Federzunge 46 und dem Lagerbolzen 58 gefädelt und durch eine Schwenkbewegung in seine Betriebsstellung geschwenkt. Anstelle des u-förmig gebogenen hakenförmigen Endes 28 kann auch ein rechtwinklig abgebogenes hakenförmiges Ende verwendet werden, das in einem entsprechend als Schacht ausgebildeten Zwischenraum 56 geschoben wird und in üblicher Weise mit geeigneten Rastmitteln am Verbindungselement 36 verrastet.

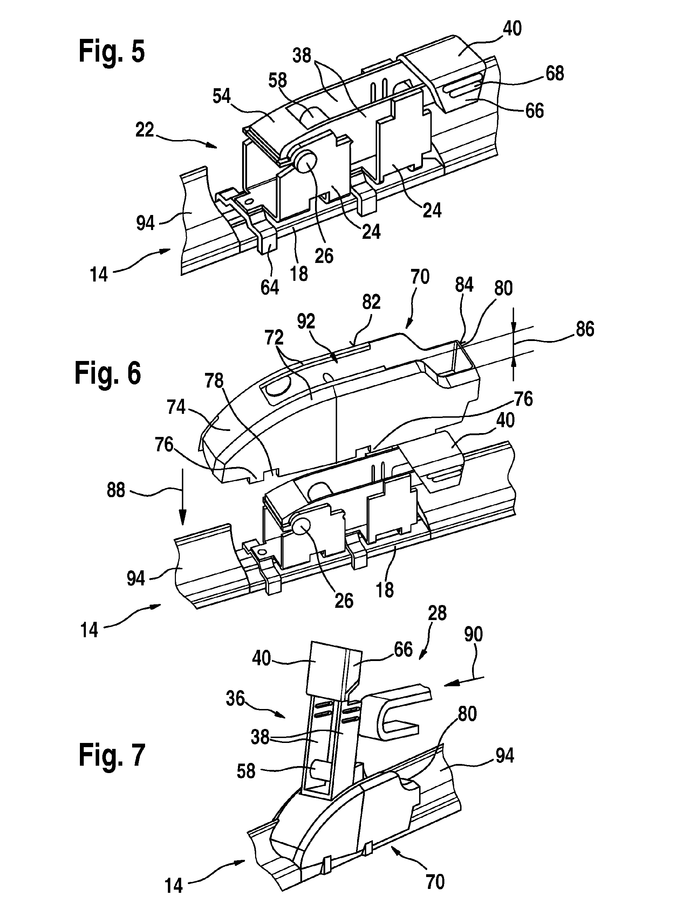

Bei der Ausführung nach Fig. 5 bis 7 ist das Anschlusselement 22 mittels Krallen 64 am Tragelement 18 befestigt. Zu beiden Seiten des Anschlusselements 22 ist ferner auf dem Tragelement 18 ein Klippspoiler 94 angebracht. Die Brücke 40 des Verbindungselements 36, die die Seitenwände 38 miteinander verbindet, besitzt Seitenwangen 66, die zum Anschlusselement 22 hinweisen und an ihren Außenseiten Griffleisten 68 besitzen. Diese erleichtern das Aufklappen des Verbindungselements 36 in die Montagestellung (Fig. 7) für das hakenförmige Ende 28 des Wischarms 12. Die Seitenwangen 66 liegen im montierten Zustand an den Außenseiten des hakenförmigen Endes 28 an und verbessern somit die Führung des Wischblatts 14 und das Design, insbesondere in Verbindung mit einer Abdeckkappe 70.

Die Abdeckkappe 70 wird in Montagerichtung 88 über das Anschlusselement 22 und das Verbindungselement 36 geschoben und mittels Halteklipps 76 am Tragelement 18 befestigt. Aussparungen 78 an den unteren Rändern der Seitenwände 72 der Abdeckkappe 70 ermöglichen einen bündigen Abschluss der Krallen 64 des Anschlusselements 22 mit den Außenseiten der Seitenwände 72. Diese sind durch eine Frontwand 74 und eine hintere Stirnwand 80 miteinander verbunden. Zwischen diesen wird eine Öffnung 92 gebildet, durch die das Verbindungselement 36 im montierten Zustand zur Montage des hakenförmigen Endes 28 aufgeklappt werden kann (Fig. 7). In der Betriebsstellung wird die Öffnung 92 weit gehend durch die Oberseite des hakenförmigen Endes 28 sowie Teile des Verbindungselements 36, insbesondere der Brücke 40 mit ihren Seitenwangen 66 abgedeckt. Damit das hakenförmige Ende etwa bündig mit den Oberkanten 82 der Seitenwände 72 abschließt, ist zur Oberkante 84 der Stirnwand 80 ein Absatz 86 vorgesehen, der auf die Dicke 29 des hakenförmigen Endes 28 abgestimmt ist. Somit ergibt sich im montierten Zustand des hakenförmigen Endes 28 ein geschlossenes Design, sodass Anschlusselement 22 mit dem Gelenk 26, 50 gegen Umwelteinflüsse weit gehend geschützt ist. Unabhängig von den Funktionsteilen kann das Design durch die Abdeckkappe 70 an den jeweiligen Einsatzfall optisch angepasst werden.

Das hakenförmige Ende 28 wird in Montagerichtung 90 zwischen die Seitenwände 38 des geöffneten Verbindungselements 36 geschoben und daraufhin in Montagerichtung 88 bewegt, um schließlich entgegengesetzt zur Montagerichtung 90 über den Lagerbolzen 58 geschoben zu werden. Danach wird das Verbindungselement 36 in die Betriebsstellung zurückgeklappt, die etwa parallel zum Wischblatt 14 verläuft.

## Patentansprüche

1. Verbindungselement (36) zum gelenkigen Verbinden eines Wischblatts(14) mit einem Wischarm (12) eines Scheibenwischers (10), wobei das Verbindungselement (36) eine zu einer Fahrzeugscheibe (16) hin offene Nabe (50) für einen am Wischblatt (14) befestigten Lagerstift (26) und mindestens eine elastisch nachgiebige Federzunge (46) besitzt, um den Lagerstift (26) in der offenen Nabe (50) zu halten, und das Verbindungselement (36) ferner mindestens eine Lagerfläche (60) hat, um sich an einem hakenförmigen Ende (28) des Wischarms (12) abzustützen, und die Nabe (50) über die Hälfte ihres Umfangs offen ist, **dadurch gekennzeichnet**, das die Federzunge (46), die mit einem Rastnocken (48) die Öffnung der Nabe (50) sperrt, in Richtung auf die Lagerfläche (60) elastisch nachgibt, wobei der Abstand zwischen der Lagerfläche (60) für das hakenförmige Ende (28) und der Federzunge (46) so dimensioniert ist, dass das hakenförmige Ende (28) in montiertem Zustand die Federzunge (46) in Richtung auf die Lagerfläche (60) blockiert.

2. Verbindungselement (36) nach Anspruch 1, **dadurch gekennzeichnet, dass** ein parallel zur offenen Nabe (50) verlaufender Lagerbolzen (58) die Lagerfläche (60) bildet und zwischen der offenen Nabe (50) und dem Lagerbolzen (58) eine Schottwand (42) verläuft, in der die Federzunge (46) vorgesehen ist und die von dem Lagerbolzen (58) einen Abstand aufweist, der auf die Dicke (29) des hakenförmigen Endes (28) abgestimmt ist.

3. Verbindungselement (36) nach Anspruch 1 oder 2, **dadurch gekennzeichnet, dass** die Federzunge (46) schmaler ist als die axiale Erstreckung der offenen Nabe (50).

4. Verbindungselement (36) nach Anspruch 3, **dadurch gekennzeichnet, dass** die Federzunge (46) durch zwei parallele Schlitze (44) in der Schottwand (42) gebildet wird.

5. Verbindungselement (36) nach einem der vorhergehenden Ansprüche, **dadurch gekennzeichnet, dass** die offene Nabe (50) in Seitenwänden (38) des Verbindungselements (36) vorgesehen ist und eine Deckwand (54) die Seitenwände (38) auf der der Öffnung der Nabe (50) abgewandten Seite miteinander verbindet.

6. Verbindungselement (36) nach einem der vorhergehenden Ansprüche, **dadurch gekennzeichnet, dass** an dem dem Wischarm (12) zugewandten Ende des Verbindungselements (36) eine Seitenwände (38) des Verbindungselements verbindende Brücke (40) vorgesehen ist, die als Anlage für den Wischarm (12) dient.

7. Verbindungselement (36) nach Anspruch 6, **dadurch gekennzeichnet, dass** die Brücke (40) zwei seitliche, zu einem Anschlusselement (22) weisende Seitenwangen (66) aufweist.

8. Verbindungselement (36) nach Anspruch 7, **dadurch gekennzeichnet, dass** die Seitenwangen (66) an ihren Außenseiten Griffleisten (68) aufweisen.

9. Wischblatt (14) mit einem Verbindungselement (36) nach einem der Ansprüche 1 bis 8, **dadurch gekennzeichnet, dass** auf ein Anschlusselement (22) eine Abdeckkappe (70) geklippst ist, die zwischen ihren Seitenwänden (72), einer Frontwand (74) und einer hinteren Stirnwand (80) eine Öffnung (92) bildet, durch die das Verbindungselement (36) im montierten Zustand aufgeklappt werden kann.

10. Wischblatt (14) nach Anspruch 9, rückbezogen auf den Anspruch 7, **dadurch gekennzeichnet, dass** zwischen den Oberkanten (82) der Seitenwände (72) und einer Oberkante (84) der Stirnwand (80) ein Absatz (86) vorgesehen ist, der der Dicke (29) des hakenförmigen Endes (28) entspricht, wobei die Erstreckung des Absatzes (86) in Längsrichtung der Erstreckung der Seitenwangen (66) entspricht.

## Claims

1. Connecting element (36) for the articulated connection of a wiper blade (14) to a wiper arm (12) of a window wiper (10), wherein the connecting element (36) has a hub (50), which is open toward a vehicle window (16), for a bearing pin (26) fastened to the wiper blade (14), and at least one elastically flexible spring tongue (46) in order to keep the bearing pin (26) in the open hub (50), and the connecting element (36) furthermore has at least one bearing surface (60) in order to support it on a hook-shaped end (28) of the wiper arm (12), and the hub (50) is open over half of its circumference, **characterized in that** the spring tongue (46), which blocks the opening of the hub (50) by means of a latching cam (48), yields elastically in the direction of the bearing surface (60), with the distance between the bearing surface (60) for the hook-shaped end (28) and the spring tongue (46) being dimensioned in such a manner that, in the fitted state, the hook-shaped end (28) blocks the spring tongue (46) in the direction of the bearing surface (60).

2. Connecting element (36) according to Claim 1, **characterized in that** a bearing pin (58) running parallel to the open hub (50) forms the bearing surface (60), and a partition (42), in which the spring tongue (46) is provided, runs between the open hub (50) and the bearing bolt (58), and said partition is at a distance from the bearing bolt (58), which distance matches the thickness (29) of the hook-shaped end (28).

3. Connecting element (36) according to Claim 1 or 2, **characterized in that** the spring tongue (46) is narrower than the axial extent of the open hub (50).

4. Connecting element (36) according to Claim 3, **characterized in that** the spring tongue (46) is formed by two parallel slots (44) in the partition (42).

5. Connecting element (36) according to one of the preceding claims, **characterized in that** the open hub (50) is provided in side walls (38) of the connecting element (36), and a top wall (54) connects the side walls (38) to each other on the side facing away from the opening of the hub (50).

6. Connecting element (36) according to one of the preceding claims, **characterized in that** a bridge (40) which connects side walls (38) of the connecting element and serves as a rest for the wiper arm (12) is provided at that end of the connecting element (36) which faces the wiper arm (12).

7. Connecting element (36) according to Claim 6, **characterized in that** the bridge (40) has two lateral side cheeks (66) facing a joining element (22).

8. Connecting element (36) according to Claim 7, **characterized in that** the side cheeks (66) have gripping strips (68) on their outer sides.

9. Wiper blade (14) with a connecting element (36) according to one of Claims 1 to 8, **characterized in that** a covering cap (70) is clipped onto a joining element (22), said covering cap forming, between its side walls (72), a front wall (74) and a rear end wall (80), an opening (92) through which the connecting element (36) can be unfolded in the fitted state.

10. Wiper blade (14) according to Claim 9, with reference back to Claim 7, **characterized in that** a step (86) which corresponds to the thickness (29) of the hook-shaped end (28) is provided between the upper edges (82) of the side walls (72) and an upper edge (84) of the end wall (80), with the extent of the step (86) in the longitudinal direction corresponding to the extent of the side cheeks (66).

## Revendications

1. Elément de liaison (36) pour la liaison articulée d'un balai d'essuie-glace (14) à un bras d'essuie-glace (12) d'un essuie-glace (10), dans lequel l'élément de liaison (36) comporte un moyeu (50) ouvert vers une vitre de véhicule (16) pour une tige de palier (26) fixée au balai d'essuie-glace (14) et au moins une languette élastique (46) déformable élastiquement, afin de retenir la tige de palier (26) dans le moyeu ouvert (50), et l'élément de liaison (36) comporte en outre au moins une face de palier (60), pour prendre appui sur une extrémité en forme de crochet (28) du bras d'essuie-glace (12), et le moyeu (50) est ouvert sur la moitié de sa périphérie, **caractérisé en ce que** la languette élastique (46), qui ferme l'ouverture du moyeu (50) avec une came d'encliquetage (48), se déforme élastiquement en direction de la face de palier (60), dans lequel la distance entre la face de palier (60) pour l'extrémité en forme de crochet (28) et la languette élastique (46) est dimensionnée de telle manière que l'extrémité en forme de crochet (28) bloque, dans l'état monté, la languette élastique (46) en direction de la face de palier (60).

2. Elément de liaison (36) selon la revendication 1, **caractérisé en ce qu'**un axe (58) s'étendant parallèlement au moyeu ouvert (50) forme la face de palier (60) et une cloison (42) s'étend entre le moyeu ouvert (50) et l'axe (58), dans laquelle la languette élastique (46) est prévue et qui présente une distance de l'axe (58) qui est adaptée à l'épaisseur (29) de l'extrémité en forme de crochet (28).

3. Elément de liaison (36) selon la revendication 1 ou 2, **caractérisé en ce que** la languette élastique (46) est plus étroite que l'extension axiale du moyeu ouvert (50) .

4. Elément de liaison (36) selon la revendication 3, **caractérisé en ce que** la languette élastique (46) est formée par deux fentes parallèles (44) dans la cloison (42) .

5. Elément de liaison (36) selon l'une quelconque des revendications précédentes, **caractérisé en ce que** le moyeu ouvert (50) est prévu dans des parois latérales (38) de l'élément de liaison (36) et une paroi de recouvrement (54) relie les parois latérales (38) sur le côté situé à l'opposé de l'ouverture du moyeu (50).

6. Elément de liaison (36) selon l'une quelconque des revendications précédentes, **caractérisé en ce qu'**il est prévu sur l'extrémité de l'élément de liaison (36) tournée vers le bras d'essuie-glace (12) un pont (40) reliant des parois latérales (38) de l'élément de liaison, lequel sert d'appui pour le bras d'essuie-glace (12).

7. Elément de liaison (36) selon la revendication 6, **caractérisé en ce que** le pont (40) présente deux joues latérales (66) tournées vers un élément de raccordement (22) .

8. Elément de liaison (36) selon la revendication 7, **caractérisé en ce que** les joues latérales (66) présentent des baguettes de prise (68) sur leurs côtés extérieurs.

9. Balai d'essuie-glace (14) avec un élément de liaison (36) selon l'une quelconque des revendications 1 à 8, **caractérisé en ce qu'**une coiffe de recouvrement (70) est encliquetée sur un élément de raccordement (22), laquelle forme entre ses parois latérales (72), une paroi avant (74) et une paroi frontale arrière (80) une ouverture (92), à travers laquelle l'élément de liaison (36) peut être relevé à l'état monté.

10. Balai d'essuie-glace (14) selon la revendication 9, rapportée à la revendication 7, **caractérisé en ce qu'**il est prévu entre les arêtes supérieures (82) des parois latérales (72) et une arête supérieure (84) de la paroi frontale (80) un épaulement (86), qui correspond à l'épaisseur (29) de l'extrémité en forme de crochet (28), dans lequel l'extension de l'épaulement (86) en direction longitudinale correspond à l'extension des joues latérales (66).
